Europäisches Patentamt

(19) European Patent Office

Office européen des brevets

(11) Numéro de publication: **0 346 253**

**A2**

(12) # DEMANDE DE BREVET EUROPEEN

(21) Numéro de dépôt: **89430016.9**

(22) Date de dépôt: **07.06.89**

(51) Int. Cl.⁴: **A 01 K 91/06**
A 01 K 89/015

(30) Priorité: **10.06.88 FR 8807971**

(43) Date de publication de la demande:
**13.12.89 Bulletin 89/50**

(84) Etats contractants désignés: **ES GB GR IT NL**

(71) Demandeur: **Ferrari, Roland**
**Traverse de la Salis**
**F-13600 La Ciotat (FR)**

(72) Inventeur: **Ferrari, Roland**
**Traverse de la Salis**
**F-13600 La Ciotat (FR)**

(74) Mandataire: **Moretti, René et al**
**c/o Cabinet BEAU DE LOMENIE "Prado-Mermoz" 232,**
**Avenue du Prado**
**F-13008 Marseille (FR)**

(54) **Dispositif de treuillage à entraînement hydraulique régulé avec bobine amovible pour ligne de pêche.**

(57) La présente invention a pour objet des dispositifs de treuillage à entraînement hydraulique régulé avec bobine amovible de ligne pour la pêche.

Le secteur technique de l'invention est celui de la fabrication de dispositif de treuillage à entraînement hydraulique, et l'application principale de l'invention est pour la pêche au gros au large, en ligne morte depuis un bateau.

Un système de treuil à entraînement hydraulique (2) comprend une alimentation régulée par une pompe (10), à pression constante réglable, lisible sur un manomètre (4) et à débit variable. Le système entraîne une bobine (1) de fil de pêche (7) par un accouplement (5) débrayable d'un flasque (18) de ladite bobine. L'autre flasque (18) entraîne une poulie (19) par un accouplement également débrayable et mobile (5'), permettant le dégagement complet de la bobine (1), qui peut être ainsi enlevée et remplacée rapidement par une autre. Un trancannage (8) assure l'enroulement correct de la ligne (7) sur la bobine.

Fig. 1

EP 0 346 253 A2

# Description

## Dispositif de treuillage à entraînement hydraulique régulé avec bobine amovible pour ligne de pêche.

La présente invention a pour objet des dispositifs de treuillage à entraînement hydraulique régulé avec bobine amovible de ligne pour la pêche.

Le secteur technique de l'invention est celui de la fabrication de dispositif de treuillage à entraînement hydraulique.

Une des applications de l'invention est son utilisation pour la pêche au gros au large en ligne morte, depuis un bateau, qui mouille plusieurs lignes en attente sur flotteurs et les récupère ensuite.

On connaît différents systèmes permettant de pêcher le gros poisson jusqu'à 80 ou 100 Kg à des profondeurs de l'ordre de 300 mètres. Ils utilisent soit des cannes flexibles fixées sur les côtés ou à l'arrière des bateaux, ayant chacune sa ligne de pêche toujours liée alors au bateau,et surtout employées en pêche sportive, soit des lignes mortes mouillées sur flotteurs en différents points et donc libérées du bateau.

Dans les deux types d'utilisation, la récupération de la ligne dont la longueur peut atteindre 500 mètres avec un poisson au bout, se fait sur un treuil enrouleur, entraîné mécaniquement et souvent à la main.

Ces treuils sont volumineux et réalisés en matériau lourd, type bronze et acier inoxydable, pour des raisons de grande longueur de stockage de ligne, de résistance mécanique, d'inertie, de corrosion et autres, ce qui les rend lourds à manipuler, difficiles à maîtriser et chers à l'achat.

En effet, ces treuils doivent avoir une bobine de stockage de ligne assez important car, d'une part, les lignes peuvent casser et il faut pouvoir remailler une nouvelle longueur sans trop perdre de temps en dévidant ce qu'il reste sur la bobine en stock et, d'autre part, dans le cas de l'utilisation en ligne morte, des longueurs données sont coupées volontairement à la profondeur voulue pour être mouillées sur un flotteur et récupérées ensuite en les reprenant l'une après l'autre sur ladite bobine de stockage, ce qui est de plus, une opération compliquée et délicate surtout avec un poisson au bout.

Les efforts de traction induisent sur les dernières couches un couple élevé qui dimensionne la puissance du treuil. Ils sont assez importants, surtout avec les à-coups que peut donner un poisson et si l'opérateur n'est pas vigilant et n'a pas de réflexes suffisamment rapides pour relâcher lui aussi sans à-coups sa tension, dont il n'a pas de moyen de contrôle, la ligne peut casser immédiatement et la pêche est perdue, ou si la ligne se dévide toute seule en entraînant la bobine en rotation libre, elle fait des cosses à l'enroulement, s'emmêle et casse ensuite à la reprise.

La plupart des fabricants proposent pour aider le pêcheur à maîtriser sa ligne et à récupérer sa pêche, d'entraîner le treuil par moteur hydraulique et certains électriques. Cela facilite certes les efforts de l'opérateur, mais ne résoud par le problème de la rupture de la ligne ni de la récupération ou du mouillage de plusieurs lignes mortes, ce qui reste une opération longue et délicage et, le coût de l'ensemble treuil et moteur d'entraînement est très élevé.

Le problème posé est de pouvoir mettre à l'eau et récupérer facilement plusieurs lignes de pêche, à partir d'un même treuil monté sur un bateau, puis d'enrouler et de remonter ces lignes en souplesse sans dépasser leur limite de résistance en traction, ni provoquer un mauvais enroulement sur la bobine lors des relâchements éventuels.

Une solution au problème posé objet de la présente invention est un dispositif de treuillage hydraulique monté à bord d'un bateau et utilisé notamment pour la pêche au gros, du type de ceux comportant un treuil et une bobine de stockage pour des lignes de plus de 300 mètres de long, caractérisé en ce que le système d'entraînement hydraulique de treuil comporte, à l'extrémité de son arbre moteur, un dispositif de centrage et d'embrayage mécanique, qui coopère avec une flasque de ladite bobine pour entraîner celle-ci en rotation et qui, lorsqu'il est débrayé, autorise le démontage de la bobine avec sa ligne et son remplacement par un autre.

Une autre solution au problème posé est un dispositif de treuillage hydraulique, caractérisé en ce que ledit système d'entraînement hydraulique comporte un moyen de contrôle et de régulation de la pression, du type assurant une tension de consigne constante dans la ligne de pêche, lequel moyen de régulation est réglable pour modifier ladite tension, et permet à ladite bobine de se dévider quand la tension de la ligne est supérieure à ladite tension de consigne.

Le résultat est un nouveau dispositif de treuillage à entraînement hydraulique pour la pêche, en particulier la pêche au gros au large et en ligne morte.

Les avantages d'un tel dispositif sont multiples, tant sur le plan de l'efficacité, la sécurité, le coût et la manoeuvre.

En effet,la bobine démontable ne peut comporter qu'une seule ligne de pêche de 500 à 600 mètres, et servir directement de fixation à une bouée de surface pour mouiller la ligne en ligne morte. Cela permet d'avoir une bobine de dimension réduite et de simplifier la mise en place de la ligne sur la bouée, sans avoir à la couper et à lui faire un noeud. L'opération inverse de récupération est très simplifiée de la même façon.

Par ailleurs, la régulation d'entraînement hydraulique à tension constante avec un débrayage hydraulique et en option un débrayage mécanique en cas de surtension et d'à-coups, limite les risques de dépasser la limite de résistance de la ligne. L'association en plus d'un flotteur amortisseur sur lequel passe ladite ligne rajoute une sauvegarde à effet immédiat.

La lecture de la pression nécessaire au relevage de la ligne permet au pêcheur d'évaluer le poids de sa prise.

Ce dispositif peut inclure aussi des prises de force pour entraîner, par exemple sur le même axe que la poulie, une poulie auxiliaire faisant office de guindeau.

Un autre avantage du dispositif est de permettre une réalisation très légère, en utilisant par exemple de l'aluminium, et de proposer un ensemble moins onéreux que les sytèmes connus à ce jour.

On peut noter également que ce dispositif peut être utilisé directement depuis le pont d'un bateau pour mettre à l'eau et récupérer des lignes mortes, mais aussi il peut être monté sur une canne pour la pêche sportive. Divers systèmes et améliorations peuvent être adaptés suivant les besoins.

La description suivante se réfère aux dessins annexés qui représentent, sans aucun caractère limitatif, un exemple de réalisation du dispositif suivant l'invention, qui est donné à titre d'illustration concrète, mais d'autres réalisations peuvent être envisagées.

La figure 1 représente une coupe de la partie treuil du dispositif.

La figure 2 représente une vue d'ensemble du dispositif monté sur un bateau et en opération.

La figure 3 représente une vue d'ensemble du dispositif avec une canne et une ligne morte mouillée.

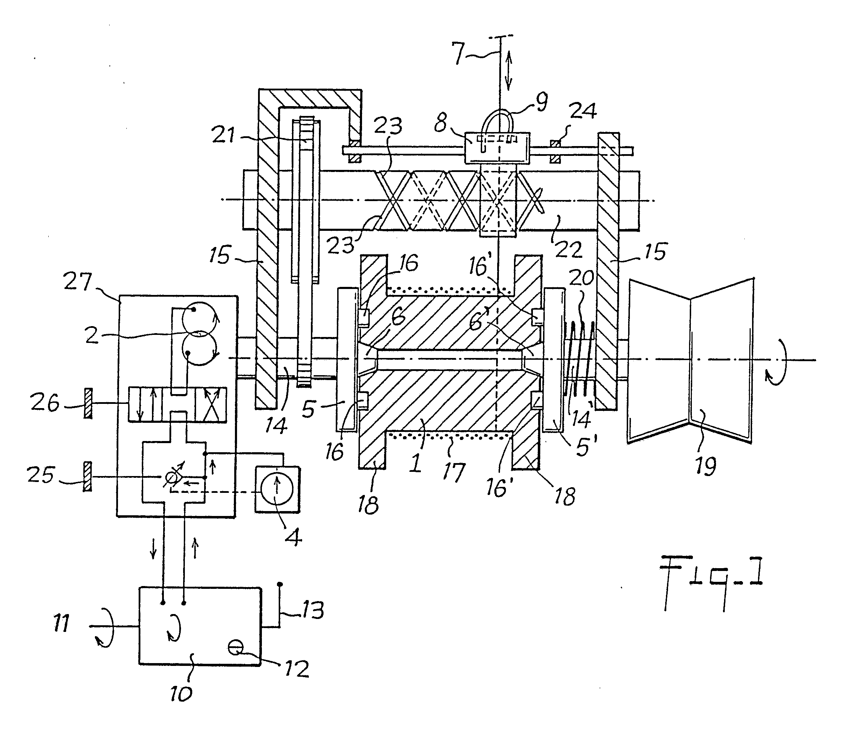

La figure 1 représente une coupe de la partie treuil du dispositif, qui est la pièce principale de celui-ci. Un moteur hydraulique 2 est alimenté d'une manière connue en fluide hydraulique 3 par toute pompe 10, qui peut être à débit et à pression variable, entraînée par toute source d'énergie extérieure tel qu'un moteur électrique ou thermique, autonome ou non, couplé sur l'arbre 1. Cette pompe 10 comporte éventuellement un organe de régulation de la pression réglable par exemple par une vis pointeau 12, permettant de limiter la pression d'alimentation du moteur 2 à une valeur maximum déterminée, par exemple correspondant à la résistance maximum du câble de la ligne de pêche.

Cette pompe est équipée éventuellement aussi d'un moyen de type levier par exemple, de variation de débit qui permet de faire varier en option l'alimentation du moteur 2 et donc la vitesse de l'arbre de rotation 14.

Le moteur 2 reçoit le fluide hydraulique 3 à travers un circuit de régulation intégré dans son boîtier 27, comportant, d'une part, un réglage de la pression maximum envoyée grâce à tout système manuel de type mollette et vis pointeau 25, avec contrôle visuel sur un manomètre 4 et, d'autre part, une vanne 26 de type à tiroir à trois positions (marche avant, marche arrière et point mort). Ainsi, le pêcheur opérateur peut réguler la pression d'alimentation du moteur 2 directement sur son boîtier 27, donc sans se déplacer de son poste, depuis zéro (tension nulle dans la ligne) jusqu'à la pression maximum fournie par la pompe 10 (éventuellement donc préréglé sur la tension de rupture de la ligne pour éviter toute fausse manoeuvre).

Lors de la prise d'un poisson on équilibrera volontairement par action sur la mollette 25 la traction de la ligne avec la tension fournie par le moteur pour que celui-ci reste en équilibre, le pêcheur peut interpréter la pression lue sur le manomètre 4 et connaître le poids de sa prise.

L'arbre moteur 14 est monté avec palier et roulement sur un châssis 15 qui peut être assemblé sur tout support pour être fixé sur le pont d'un bateau par exemple. L'extrémité de cet arbre 14 porte un dispositif d'embrayage composé, par exemple d'un plateau 5 avec un cône de centrage 6 et des ergots d'entraînement 16.

La bobine de stockage de la ligne 7 de pêche dispose d'un tambour 17 pouvant recevoir, par exemple, 500 mètres de ligne de 1,6 mm de diamètre, pour pêcher des poissons de 80 à 100 Kg. Elle peut être réalisée en aluminium et au moins un de ses flasques 18 comporte des encoches correspondant exactement au cône de centrage 6 et aux ergots 16 du plateau embrayage 5. Il peut être rajouté en variante un axe pouvant se centrer dans le cône 6 afin de pouvoir débrayer la bobine des ergots d'entraînement 16, tout en gardant celle-ci en place et libre sur ledit axe.

L'autre flasque de la bobine 1 peut comporter les mêmes encoches pour entraîner un dispositif de centrage et d'embrayage mécanique 5', permettant de faire tourner un axe 14' monté avec palier et roulement sur le châssis 15 pour entraîner une poulie 19 de type guindeau auxiliaire.

Ce deuxième dispositif d'embrayage est débrayable de la bobine 1 par compression par exemple d'un ressort 20, dont la course permet de dégager les deux plateaux d'embrayage 5 et 5', en écartant les cônes 6 et 6' et les ergots 16 et 16', d'une distance au moins égale à la largeur de la bobine 1. Celle-ci est alors libre et peut être enlevée du dispositif et éventuellement remplacée par une autre de même type.

Quand le ressort 20 est en position normale, les deux dispositifs d'embrayage 5 et 5' coopèrent avec les flasques de la bobine 1 et l'ensemble peut être entraîné en rotation par le moteur hydraulique 2.

En option, il pourra être avantageusement rajouté dans ou en plus du dispositif de centrage et d'embrayage 5, un moyen permettant un débrayage mécanique de la bobine 1, qui peut alors tourner librement en restant centrée, lequel moyen est mis en oeuvre soit par l'opérateur, soit en sécurité par excés de tension sur la ligne 7. Ce moyen peut être un ensemble de deux disques entraînés ensemble en rotation par frottement l'un contre l'autre jusqu'à un couple maximum donné.

Afin d'assurer un bon enroulement de la ligne 7 sur le tambour 17 de la bobine 1, il sera avantageusement rajouté sur le châssis 15 un ensemble de trancannage de type connu et entraîné par l'arbre moteur 14, grâce à une courroie 21 ou des jeux d'engrenages,laquelle courroie fait tourner un arbre 22 dans lequel sont taillées deux rainures en hélice 23 de sens contraire, de longueur égale à la largeur de la bobine 1.

La bague guide ligne 8 se déplace alors alternativement d'une extrémité à l'autre de ces rainures 23, en passant de l'une à l'autre à chaque fin de course 24.

Le pas des hélices est fonction des diamètres de la bobine et de ligne 7 et de la vitesse relative de rotation de l'arbre 23 par rapport à la bobine, de telle façon que ladite ligne soit enroulée sur ladite bobine en spire jointive ou écartée suivant un pas constant. Pour cela, la bague 8 comporte un anneau 9 qui guide la ligne et ayant une ouverture en chicane pour y dégager ou engager ladite ligne 7, lors du démontage et du remplacement de la bobine.

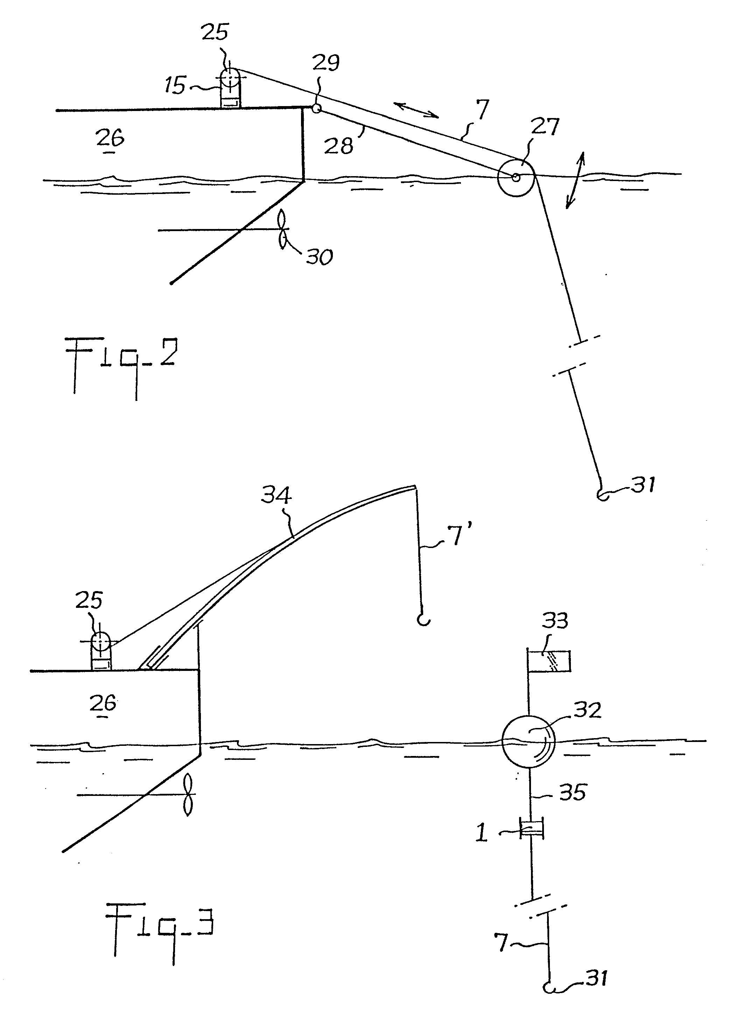

La figure 2 représente une vue d'ensemble du dispositif monté sur un bateau 26, comportant la partie treuil 25 décrit dans la figure 1, et fixé au pont du bateau par son châssis 15, monté sur tout support.

En option, la ligne 7 est guidée et passe sur un flotteur 27, avant de plonger dans l'eau, lequel flotteur est relié au bateau par un bras 28 de liaison articulé à un axe 29 solidaire de la coque.

Ce système permet, d'une part, de déborder la ligne 7 des hélices 30 du bateau et, d'autre part, d'absorber des à-coups de tension dans la ligne quand un poisson mord à l'hameçon 31, le flotteur 27 s'immergeant et servant alors d'amortisseur.

La figure 3 représente une vue d'ensemble du dispositif de treuillage 25 décrit dans la figure 1, monté sur un bateau 26 sans le système flotteur amortisseur 27 de la figure 2, mais avec une canne à pêche 34 sur laquelle on peut passer une ligne 7' montée sur une bobine dans le dispositif 25. Ceci est une autre manière d'utiliser ce dernier.

Cette figure 3 représente également une ligne 7 mouillée sur un flotteur 32 muni d'un drapeau ou pavillon de repérage 33.

La bobine 1 dégagée du dispositif 25, est accrochée directement au flotteur, par exemple par un orin 35 avec une longueur déterminée de la ligne 7, afin que l'hameçon 31 soit à la profondeur désirée. Ce mouillage de ligne est appelé ligne morte et permet d'en disposer plusieurs en attente avec le même bateau et le dispositif objet de l'invention assure cette mise en oeuvre très rapidement, puis la récupération très aisément.

## Revendications

1. Dispositif de treuillage hydraulique monté à bord d'un bateau et utilisé notamment pour la pêche au gros, du type de ceux comportant un treuil et une bobine de stockage pour des lignes de plus de 300 mètres de long, caractérisé en ce que le système (2) d'entraînement hydraulique de treuil comporte à l'extrémité de son arbre moteur (14), un dispositif (5) de centrage et d'embrayage mécanique, qui coopère avec une des flasques (18) de ladite bobine (1) pour entraîner celle-ci en rotation, et qui, lorsqu'il est débrayé, autorise le démontage de la bobine avec sa ligne (7) et son remplacement par une autre.

2. Dispositif de treuillage hydraulique suivant la revendication 1, caractérisé en ce que le système (2) d'entraînement hydraulique comporte un moyen de contrôle(4)et de régulation (25) de la pression, du type assurant une tension de consigne constante dans la ligne de pêche (7), lequel moyen de régulation (25) est réglable pour modifier ladite tension, et permet à ladite bobine de se dévider quand la tension de la ligne est supérieure à ladite tension de consigne.

3. Dispositif de treuillage hydraulique suivant la revendication 1 ou 2, caractérisé en ce qu'il comporte un dispositif d'embrayage permettant un débrayage mécanique de ladite bobine qui peut alors tourner librement en restant centrée, lequel dispositif est mis en oeuvre soit par l'opérateur, soit par un excès de tension sur la ligne.

4. Dispositif de treuillage hydraulique suivant l'une quelconque des revendications 1 à 3, caractérisé en ce qu'il comporte un moyen (8) de trancannage de la ligne (7) sur la bobine (1), lequel moyen est entraîné mécaniquement avec l'arbre moteur (14) par tout système (21) de courroie ou d'engrenages assurant sa rotation pour déplacer le guide ligne (9) en fonction du diamètre et de la rotation de la bobine et du diamètre de ladite ligne (7), lequel guide ligne comporte une ouverture de type chicane pour dégager ou engager la ligne lors du démontage et du remplacement de la bobine (1).

5. Dispositif de treuillage hydraulique suivant l'une quelconque des revendications 1 à 4, caractérisé en ce qu'il comporte un deuxième dispositif (5') de centrage et d'embrayage mécanique qui coopère avec l'autre flasque (18) de ladite bobine pour être entraîné par celle-ci et transmettre la rotation à une poulie (19) de type guindeau, lequel dispositif d'embrayage libère complètement la bobine (1) en position débrayée.

6. Dispositif de treuillage hydraulique suivant l'une quelconque des revendications 1 à 5, caractérisé en ce qu'il comporte un flotteur (17) monté à l'extrémité d'un bras (28) articulé, solidaire de la coque (26) du bateau et débordant ledit flotteur de celle-ci, et sur lequel la ligne de pêche (7) est guidée pendant sont treuillage.

7. Dispositif de treuillage hydraulique suivant l'une quelconque des revendications 1 à 6, caractérisé en ce que la bobine (1) de stockage de ligne est réalisée en aluminium.

Fig. 1

Fig-2

Fig-3